# FASCICULE DE BREVET EUROPEEN

(11) **EP 4 323 695 B1**
(45) Date de publication et mention de la délivrance du brevet: **03.12.2025**
(21) Numéro de dépôt: 22722521.6
(22) Date de dépôt: 13.04.2022
(51) Int. Cl.: F24B 5/02, F24B 13/00, F24B 1/19

(54) **DISPOSITIF DE CHAUFFAGE À BOIS**
HOLZHEIZVORRICHTUNG
WOOD HEATING DEVICE

(30) Priorité: 16.04.2021 FR 2103979
(43) Date de publication de la demande: 21.02.2024
(73) Titulaire: Atelier Dominique Imbert, 34380 Viols le Fort (FR)
(72) Inventeur: GABORIT, Laurent, 34830 Clapiers (FR); CHALIER, Jean-Marc, 34800 Aspiran (FR)
(74) Mandataire: Rhein, Alain
(86) Numéro de dépôt international: PCT/EP2022/059841
(87) Numéro de publication internationale: WO 2022/219026

(56) Documents cités:
- EP-A1- 0 335 048
- EP-A2- 2 679 908
- FR-A1- 2 900 461
- US-A- 4 224 921
- US-A- 5 702 244

## Description

La présente invention concerne un dispositif de chauffage à bois de type poêle et cheminée, et appartient plus particulièrement au domaine des foyers à bois.

A ce jour, il existe des cheminées décoratives iconiques à foyer suspendu. Ce type de cheminée se compose, d'une part, d'un foyer ouvert qui possède une forme esthétique élégante, et d'autre part, d'un conduit d'évacuation des gaz de combustion relié au foyer ouvert. Le conduit d'évacuation fait en outre office d'élément de suspension du foyer par rapport à un support qui est la plupart du temps formé par un plafond. Certains modèles de cheminées décoratives présentent un foyer de forme particulière telle qu'une forme oblate.

Il est à noter que le document EP 2923152 décrit un dispositif pour améliorer la combustion dans une cheminée de forme usuelle à foyer ouvert ou fermé. A ce titre, ce dispositif comprend un chenet intégrant un échangeur thermique dans lequel s'étendent des conduits d'air. Le lit de braises se consumant sur le chenet, l'air circule par convection naturelle au sein des conduits et se réchauffe par transfert d'énergie calorifique depuis le lit de braises vers les conduits. L'air comburant est ainsi préchauffé avant d'être libéré par des conduits verticaux situés à l'arrière du foyer ce qui permet d'améliorer la combustion. Le dispositif décrit par le document EP 2923152 est conçu spécifiquement pour adapter ce système à une cheminée de forme usuelle à foyer ouvert ou fermé.

Il existe également des dispositifs d'arrivée d'air réglable disposés sur des foyers fermés suspendus ou adossés à un mur. A ce titre, le document FR 2944585 décrit un dispositif d'arrivée d'air réglable à renvoi d'angle disposé frontalement en partie basse de l'encadrement d'une porte vitrée. Ce dispositif d'arrivée d'air comporte une réglette montée mobile dans une coulisse de la porte vitrée. La coulisse est obturée par une contre-tirette munie d'ouvertures. Le flux d'air passe par des lumières situées en contrebas de l'encadrement de la porte vitrée, puis dans les découpes de la réglette, avant d'être est renvoyé perpendiculairement aux sections d'arrivée d'air vers l'intérieur du foyer via les ouvertures.

Le document FR 2835043 propose quant à lui un dispositif permettant l'allongement du parcours des fumées dans l'avaloir d'un foyer fermé. Ainsi, l'avaloir comporte un déflecteur plat comprenant deux orifices situés de part et d'autre d'une margelle située en contrebas de la partie arrière du déflecteur plat. Le positionnement latéral des orifices génère une circulation courbe des fumées de combustion avant leur passage dans l'exutoire. L'allongement du parcours des fumées s'échangeant sur les parois de l'avaloir permet donc l'abaissement des températures de fumées. Le rendement de combustion d'un foyer fermé à bois est de ce fait optimisé. Néanmoins, ce document choisit de traiter les fumées d'échappement et non l'air comburant pénétrant dans la chambre de combustion du foyer à bois.

On connait encore par le document FR 2 900 491 un dispositif de chauffage sous forme d'un foyer fermé de cheminée comportant un foyer intérieur, au moins une partie vitrée, un circuit d'air primaire et un circuit d'air secondaire de combustion et de propreté de la paroi vitrée, ce dispositif comprenant encore une entrée d'air à débit réglable située à l'arrière du foyer intérieur, un foyer intérieur à parois garnis de blocs réfractaires. Le circuit d'air primaire est formé de deux branches longeant les blocs réfractaires de fond de foyer et latéraux et sortant chacune à l 'intérieur du foyer à travers un bloc latéral réfractaire par des orifices situés au-dessus du fond du foyer. Le circuit d'air secondaire part de l'entrée d'air, longe les blocs réfractaires de fond de foyer et se prolonge vers le haut le long des blocs réfractaires latéraux pour donner naissance à un flux d'air descendant le long de la face arrière de la partie vitrée.

La présente invention se veut à même d'améliorer le rendement de tels dispositifs de chauffage à bois, en particulier en amenant dans l'enceinte de combustion de ce dispositif de l'air comburant pré chauffé.

A cet effet, la présente invention concerne un dispositif de chauffage à bois, tel un poêle ou une cheminée, comprenant une chambre de combustion délimitée par une enceinte de combustion métallique, comportant une bouche d'entrée, équipée de moyens de fermeture de type escamotable, et comportant au moins un orifice d'entrée d'air comburant distinct, ladite enceinte de combustion étant logée dans une enveloppe externe métallique, l'enveloppe externe comportant une ouverture frontale coïncidant avec la bouche d'entrée de l'enceinte de combustion et comportant au moins une ouverture d'alimentation en air extérieur, et au moins une canalisation d'air comburant et une réserve d'air préchauffé étant ménagées entre l'enveloppe externe et l'enceinte de combustion, la réserve d'air préchauffé s'étendant depuis l'ouverture d'alimentation en air extérieur jusqu'à une extrémité de la canalisation d'air comburant, la canalisation d'air comburant s'étendant depuis ladite extrémité jusqu'à l'orifice d'entrée d'air comburant, la réserve d'air préchauffé étant délimitée au moins en partie par une paroi interne de l'enveloppe externe et par une paroi externe de l'enceinte de combustion, la réserve d'air préchauffé contournant l'enceinte de combustion par au moins un côté à partir de l'ouverture d'alimentation en air extérieur, le dispositif de chauffage comprenant un volet de réglage d'arrivée d'air neuf configuré pour réguler une entrée d'air au sein de l'enceinte de combustion, ce dispositif de chauffage étant caractérisé en ce que l'ouverture d'alimentation en air extérieur est disposée latéralement à la bouche d'entrée et que le volet de réglage d'arrivée d'air neuf est en communication fluidique avec la réserve d'air préchauffé et en communication fluidique avec la canalisation d'air comburant, ce volet de réglage d'arrivée d'air neuf étant situé à une position intermédiaire entre la réserve d'air préchauffé et la canalisation d'air comburant.

Un avantage technique découlant de la présente invention consiste en ce qu'en élevant l'air préchauffé stocké au sein d'une réserve d'air préchauffé entourant la chambre de combustion, et en faisant circuler l'air comburant sur un trajet rallongé s'étendant depuis ladite réserve d'air préchauffé à travers une canalisation venant acheminer l'air comburant jusqu'à l'orifice d'entrée de l'enceinte, l'espace intérieur au sein de cette enceinte monte plus rapidement en température. Cette configuration permet en outre à la chambre de combustion d'atteindre des températures plus élevées.

De plus, la réserve d'air préchauffé formée autour de l'enceinte de combustion, et en amont de cette dernière, constitue un stock d'air porté à des températures élevées avant même son entrée dans le foyer de combustion. De préférence, le volet de réglage d'arrivée d'air neuf, ou réglage AAN, vient prélever l'air comburant directement dans ladite réserve, de sorte que l'air comburant prélevé par le volet de réglage AAN est pré chauffé.

Une telle configuration permet de faire grandement diminuer la variabilité de la température au sein de la chambre de combustion par rapport au débit d'air extérieur entrant par l'ouverture d'alimentation en air extérieur.

La montée en température plus rapide et plus importante au sein de la chambre de combustion, associée à une variabilité moins importante de cette montée en température par rapport au débit d'air extérieur entrant, permettent une diminution des rejets de particules nocives. Les performances environnementales du dispositif de chauffage s'en trouvent grandement améliorées.

Avantageusement, au moins une ouverture d'alimentation en air extérieur se situe à la hauteur de l'ouverture frontale de l'enveloppe externe.

Avantageusement, la réserve d'air préchauffé contourne l'enceinte de combustion par au moins un côté, à partir de l'ouverture d'alimentation en air extérieur, et de préférence par les deux côtés, gauche et droit.

Selon une caractéristique possible, l'enceinte de combustion comporte une partie arrière située diamétralement à l'opposé de la bouche d'entrée, la réserve d'air préchauffé s'étendant jusqu'à ladite partie arrière.

Selon une caractéristique supplémentaire possible, l'orifice d'entrée d'air comburant est placé en aval du volet de réglage d'arrivée d'air neuf, le sens « aval » étant défini d'après le sens de circulation de l'air depuis l'ouverture d'alimentation en air extérieur.

Selon une caractéristique supplémentaire possible, le volet de réglage d'arrivée d'air neuf est distinct de l'ouverture d'alimentation en air extérieur, en étant déporté par rapport à l'ouverture d'alimentation en air extérieur. Un avantage associé à cette configuration est qu'il est possible de constituer un stock d'air préchauffé en aval de l'ouverture d'alimentation en air extérieur, ledit stock d'air pouvant alimenter le volet de réglage AAN et ainsi alimenter la chambre de combustion en air comburant déjà préchauffé.

Selon une caractéristique supplémentaire possible, le volet de réglage d'arrivée d'air neuf est voisin de l'extrémité de la canalisation d'air comburant ou situé au niveau de ladite extrémité de la canalisation d'air comburant.

Selon une autre caractéristique possible de l'invention, la réserve d'air préchauffé s'étend au moins en partie autour de l'enceinte de combustion et/ou au-dessus de cette dernière.

Selon une caractéristique possible de l'invention, l'ouverture d'alimentation en air extérieur est délimitée au moins en partie par l'ouverture frontale de l'enveloppe externe et au moins en partie par l'enceinte de combustion.

Selon une autre caractéristique possible de l'invention, la réserve d'air préchauffé s'étend au moins en partie autour de l'enceinte de combustion depuis une ouverture d'alimentation en air extérieur disposée latéralement à la bouche d'entrée jusqu'à l'extrémité de la canalisation d'air comburant.

Selon une caractéristique possible de l'invention, la réserve d'air préchauffé s'étend de part et d'autre, latéralement à l'enceinte de combustion depuis des ouvertures d'alimentation en air extérieur disposées latéralement de part et d'autre de ladite bouche d'entrée de l'enceinte de combustion.

Selon une caractéristique supplémentaire possible de l'invention, la canalisation d'air comburant s'étend en partie au-dessus de l'enceinte de combustion.

Selon une autre caractéristique possible de l'invention, le au moins un orifice d'entrée d'air comburant dans l'enceinte de combustion se situe sensiblement au-dessus de la bouche d'entrée.

Selon une autre caractéristique possible, la canalisation d'air comburant comprend une chicane configurée pour rallonger un circuit de flux d'air extérieur au sein de ladite canalisation.

Selon une caractéristique possible supplémentaire, la paroi interne de l'enveloppe externe est située immédiatement en regard de la paroi externe de l'enceinte de combustion. Le dispositif de chauffage ne comporte alors pas de paroi intermédiaire intercalée entre ladite paroi interne de l'enveloppe externe et ladite paroi externe de l'enceinte de combustion.

Selon une caractéristique supplémentaire possible de l'invention, les moyens de fermeture de type escamotable sont définis par au moins un volet monté pivotant ou coulissant sur l'enceinte de combustion pour, en position de fermeture refermer la bouche d'entrée.

En particulier, au moins un volet de fermeture peut comporter une paroi vitrée.

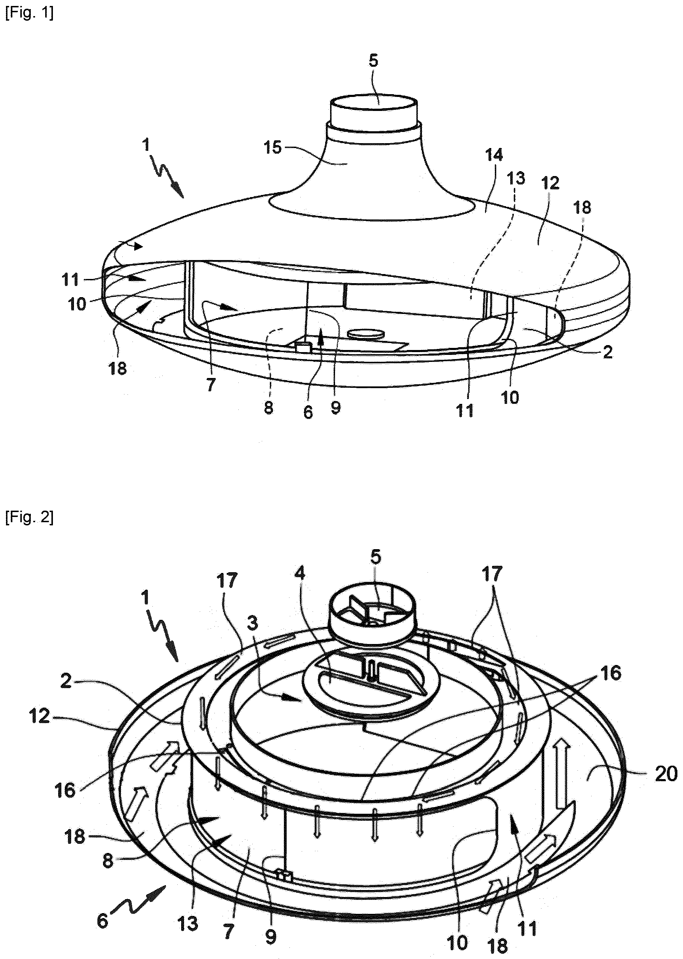

D'autres particularités et avantages apparaîtront dans la description détaillée qui suit, correspondant à un exemple de réalisation non limitatif de l'invention, cet exemple étant illustré par les Figures 1 à 4 placées en annexe parmi lesquelles :
La **Figure 1** est une représentation schématisée et en perspective d'un dispositif de chauffage à bois selon l'invention.
La **Figure 2** est une représentation schématisée et en perspective de ce même dispositif, la partie supérieure de l'enveloppe externe ayant été retirée.
La **Figure 3** est une représentation schématisée et en coupe verticale du même dispositif de chauffage à bois.
La **Figure 4** est une représentation du même dispositif de chauffage, vu du dessous en perspective, sur laquelle on a illustré également certains éléments internes du dispositif.

Telle que représentée dans les figures des dessins ci-joints, la présente invention concerne un dispositif de chauffage à bois 1 qui peut prendre la forme d'un poêle ou comme plus particulièrement illustré celle d'une cheminée.

Plus particulièrement, ce dispositif de chauffage à bois 1 comporte essentiellement une enceinte de combustion 2 de type métallique qui peut prendre différentes formes de réalisation. Elle peut être de section circulaire ou parallélépipédique. Elle est de préférence fermée en partie supérieure par un dôme 3 au niveau duquel est ménagée une ouverture de sortie des fumées 4 destinée à communiquer avec un conduit d'évacuation des fumées de combustion 5.

Cette enceinte de combustion 2 comporte, notamment dans sa partie avant 6, une bouche d'entrée 7 permettant d'accéder à la chambre de combustion 8 délimitée par l'enceinte de combustion 2.

En particulier, cette bouche d'entrée 7 permet le chargement de l'enceinte de combustion 2 en combustible, en l'occurrence de bois. Cette bouche d'entrée 7 est équipée de moyens de fermeture 9 de type escamotable. A titre d'exemple, ces moyens de fermeture 9 peuvent emprunter la forme d'un volet de fermeture monté pivotant autour d'un axe vertical à l'une de ses extrémités latérales 10, en bordure latérale 11 de ladite bouche d'entrée 7. Selon un autre mode de réalisation, ce volet peut être monté coulissant sur la paroi externe de l'enceinte de combustion 2 définie, par exemple, de section sensiblement cylindrique. Ce volet, également de forme convexe, peut, selon le cas, s'étendre au-devant de la bouche d'entrée 7 et refermer celle-ci ou s'effacer latéralement en laissant le libre accès à la chambre de combustion 8.

Dans une configuration préférentielle, les moyens de fermeture 7 sont définis par deux volets convexes montés coulissant sur l'enceinte de combustion 2 de section sensiblement cylindrique 2 pour, selon le cas, refermer la bouche d'entrée 7 ou s'effacer par coulissement de part et d'autre de cette dernière de manière à donner libre accès à la chambre de combustion 8.

Avantageusement, un tel volet définissant les moyens de fermeture 9 est vitré au moins partiellement, facilitant la vision dans l'enceinte de combustion 2.

Selon l'invention, l'enceinte de combustion 2 est logée dans une enveloppe externe 12 également de type métallique, laquelle comporte une ouverture frontale 13 coïncidant avec la bouche d'entrée 7. Dans sa partie supérieure 14, cette enveloppe externe 12 définit un avaloir 15 au-dessus de l'ouverture de sortie des fumées 4 de l'enceinte de combustion 2. Sur cet avaloir 15 est susceptible d'être raccordé le conduit d'évacuation des fumées de combustion 5.

L'enceinte de combustion 2 est également munie d'au moins un orifice d'entrée d'air comburant 16. Celui-ci peut être implanté tout autour de cette enceinte de combustion 2. Toutefois, selon un mode de réalisation avantageux, l'orifice d'entrée d'air comburant 16 débouche dans la chambre de combustion 8, au-dessus de la bouche d'entrée 7. Un avantage associé est de former un rideau d'air comburant descendant.

Selon l'invention, entre l'enveloppe externe 12 et l'enceinte de combustion 2 s'étend une réserve d'air préchauffé 20, capable de stocker de l'air comburant chauffé dont est ensuite alimentée l'enceinte de combustion 2 au travers du ou des orifices d'entrée d'air comburant 16. L'air extérieur est admis dans la réserve d'air préchauffé 20 via au moins une ouverture d'alimentation en air extérieur 18.

La réserve d'air préchauffé 20 forme ainsi un volume de stockage d'air apte à s'élever en température, autour de l'enceinte de combustion 2. L'enveloppe externe 12 du dispositif de chauffage s'étend elle-même autour de ladite réserve d'air préchauffé 20. La réserve d'air préchauffé 20 est de préférence délimitée radialement au moins en partie par la paroi interne de l'enveloppe externe 12 et par la paroi externe de l'enceinte de combustion 2.

De manière optionnelle et avantageuse, comme cela est le cas dans le présent exemple, une canalisation d'air comburant 17 s'étend en outre entre l'enveloppe externe 12 et l'enceinte de combustion 2. La circulation de l'air comburant s'effectue alors dans la canalisation d'air comburant 17. La canalisation 17 s'étend ici entre une entrée de canalisation, qui est en communication fluidique avec la réserve d'air préchauffé 20, et le ou les orifices d'entrée d'air comburant 16.

La canalisation d'air comburant 17 peut ainsi alimenter l'enceinte de combustion 2 en air comburant, qui a préalablement été préchauffé au sein de la réserve 20.

Avantageusement, la canalisation d'air comburant 17 est délimitée radialement au moins en partie par la paroi interne de l'enveloppe externe 12 et la paroi externe de l'enceinte de combustion 2.

Une telle canalisation peut toutefois emprunter la forme d'un profilé tubulaire s'étendant entre ces parois de l'enveloppe externe et l'enceinte de combustion.

Une telle canalisation 17 procure l'avantage d'amener dans la chambre de combustion 8 de l'enceinte 2 de l'air comburant préalablement préchauffé et prélevé dans la réserve d'air préchauffé 20, améliorant considérablement la combustion et donc le rendement du dispositif de chauffage 1.

Cette canalisation 17 communique ainsi d'une part avec cet ou ces orifices d'entrée d'air comburant 16, et d'autre part avec la réserve d'air préchauffé 20.

Selon un mode de réalisation préférentiel, l'ouverture d'alimentation en air extérieur 18 est ménagée à hauteur de l'ouverture frontale 13 de l'enveloppe externe 12. L'ouverture d'alimentation en air extérieur 18 est plus particulièrement délimitée au moins en partie par cette ouverture frontale 13 et au moins en partie par l'enceinte de combustion 2. L'ouverture d'alimentation en air extérieur 18 est alors placée à l'avant du dispositif de chauffage 1.

Selon un mode de réalisation préféré, une ouverture d'alimentation en air extérieur 18 est ménagée au niveau d'au moins une bordure latérale 11 de la bouche d'entrée 7, avantageusement à hauteur de chacune des bordures latérales 11 de la bouche d'entrée 7.

La canalisation 17 rejoint un orifice d'entrée d'air comburant 16 d'une part, et la réserve d'air préchauffé 20 d'autre part, qui elle-même rejoint l'ouverture d'alimentation en air extérieur 18. La canalisation 17 s'étend de préférence au moins en partie autour de l'enceinte de combustion 2 et/ou au-dessus de l'enceinte de combustion 2.

Dans le présent exemple, la canalisation 17 et la réserve d'air préchauffé 20 contournent l'enceinte de combustion 2 par au moins un côté, de préférence par le côté gauche et par le côté droit.

De préférence, la réserve d'air préchauffé 20 comprend une première portion contournant de part et d'autre l'enceinte 2, et la canalisation 17 comprend une deuxième portion passant par le dessus de l'enceinte de combustion 2, jusqu'à atteindre le ou les orifices d'entrée d'air comburant 16 ménagés par exemple, comme dans l'exemple ici décrit et illustré, au-dessus de la bouche d'entrée 7.

De manière préférentielle et conforme au mode de réalisation correspondant aux dessins ci-joints, la réserve d'air préchauffé 20, partant d'au moins une ouverture d'alimentation en air extérieur 18 en bordure latérale 11 de la bouche d'entrée 7, contourne l'enceinte de combustion 2 en rejoignant une partie arrière de cette dernière.

La canalisation d'air comburant 17 s'étend de préférence à partir d'une entrée de canalisation qui est en communication fluidique avec la réserve d'air préchauffé 20, et de préférence au-dessus de l'enceinte de combustion 2, jusqu'à atteint le ou les orifices d'entrée d'air comburant 16. Comme indiqué ci-avant, le ou les orifices d'entrée d'air comburant 16 sont par exemple situés au-dessus de la bouche d'entrée 7.

Plus particulièrement, la partie arrière de l'enceinte de combustion 2 est ici diamétralement opposée à la partie avant 6 de l'enceinte. Il est avantageux que la réserve d'air préchauffé 20 s'étende depuis l'ouverture d'alimentation en air extérieur 18, située à l'avant, jusqu'à cette partie arrière de l'enceinte. Ainsi, le trajet de l'air entrant est rallongé, ce qui permet une montée en température plus importante de l'air comburant lors de son stockage. De plus, le volume disponible dans la réserve d'air préchauffé est accru.

Toujours en conformité avec ce même mode préférentiel, le dispositif de chauffage 1 comporte ainsi une première portion gauche de réserve d'air préchauffé et une deuxième portion droite de réserve d'air préchauffé (les sens « gauche » et « droit » étant repérés par rapport à la bouche d'entrée 7), partant toutes deux des ouvertures d'alimentation en air extérieur 18 au niveau de chacune des bordures latérales 11 de la bouche d'entrée 7, pour contourner de part et d'autre l'enceinte de combustion 2 et rejoindre la partie arrière de cette dernière.

Selon une autre particularité de l'invention, au moins une chicane peut être ménagée dans la canalisation d'air comburant 17 pour rallonger le circuit du flux d'air extérieur autour de l'enceinte de combustion 2 et entre cette dernière et l'enveloppe externe 12.

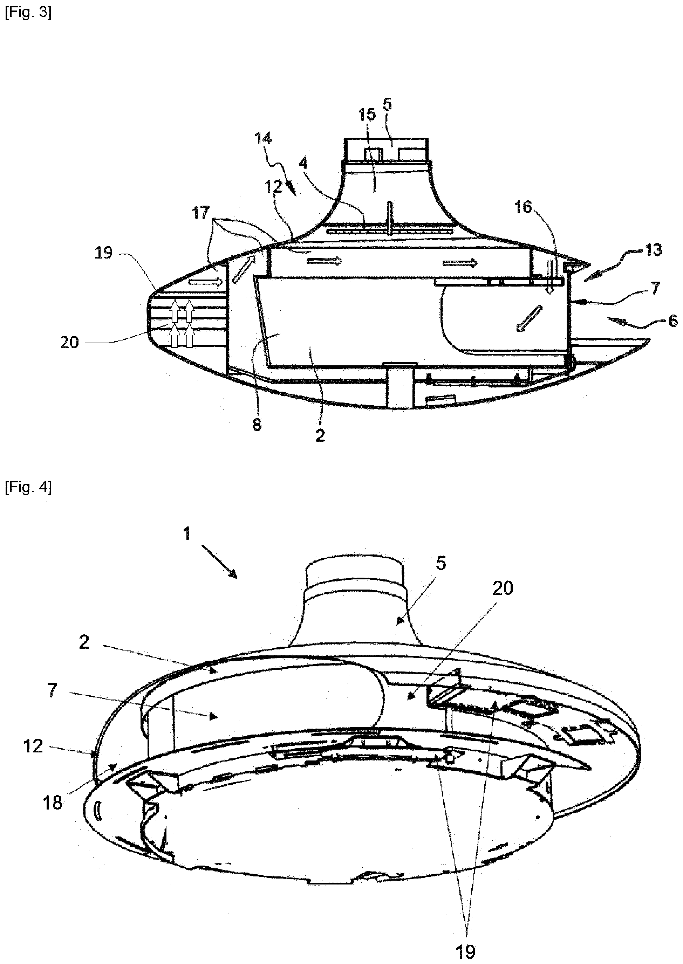

Comme il est visible sur la vue de la figure 4 annexée, le dispositif de chauffage 1 comprend au moins un volet de réglage d'arrivée d'air neuf 19, communément appelé « réglage AAN » dans le domaine technique de la conception des dispositifs de chauffage, configuré pour réguler une entrée d'air au sein de l'enceinte de combustion 2. La réserve d'air préchauffé 20 et la canalisation 17 sont en communication fluidique avec le volet de réglage d'arrivée d'air neuf 19. Ainsi, le volet de réglage d'arrivée d'air neuf 19 est apte à prélever de l'air préchauffé stocké dans la réserve d'air préchauffé 20, et à fournir cet air préchauffé à la canalisation 17 en tant qu'air comburant pour l'alimentation du foyer de combustion.

De manière avantageuse, l'orifice d'entrée d'air comburant 16 est placé en aval du volet de réglage d'arrivée d'air neuf 19. Selon une autre caractéristique avantageuse, le volet de réglage d'arrivée d'air neuf 19 est distinct de l'ouverture d'alimentation en air extérieur 18, en étant déporté par rapport à ladite ouverture d'alimentation en air extérieur 18. De manière également préférentielle, le volet de réglage d'arrivée d'air neuf 19 ne se situe pas à l'avant du dispositif, mais plutôt sur une partie latérale (comme représenté sur la Figure 4) ou sur une partie arrière. Ici, le volet de réglage d'arrivée d'air neuf 19 se trouve dans la portion latérale de la réserve d'air préchauffé 20, qui contourne l'enceinte 2 de part et d'autre.

Le volet de réglage d'arrivée d'air neuf 19 est situé à une position intermédiaire entre la réserve d'air préchauffé 20 et la canalisation d'air comburant 17. Selon un exemple possible, le volet de réglage d'arrivée d'air neuf 19 est voisin d'une entrée de la canalisation 17 ou se situe au niveau d'une entrée de la canalisation d'air comburant 17.

Un avantage associé à cette configuration est qu'il est possible non seulement de constituer un stock d'air comburant préchauffé en aval de l'ouverture d'alimentation en air extérieur 18, mais également d'alimenter le réglage AAN avec cet air comburant chauffé. On accroît ainsi de façon importante la montée en température au sein de l'enceinte de combustion 2, comparativement à des dispositifs existants où le réglage AAN serait voisin ou confondu avec l'ouverture d'alimentation en air extérieur et où l'air fourni au réglage AAN ne serait pas préchauffé. Un autre avantage technique est de diminuer la variabilité de la montée en température dans le foyer, vis-à-vis du débit d'air extérieur entrant dans le dispositif.

Le dispositif de chauffage 1 peut être conçu pour être suspendu au travers du conduit d'évacuation 5. Il peut être également monté rotatif autour de ce conduit d'évacuation 5.

Pour rappel, ce dispositif de chauffage peut emprunter différentes formes de réalisation telles que sphérique, parallélépipédique, oblate ou ovoïde.

## Revendications

1. Dispositif de chauffage à bois (1), tel un poêle ou une cheminée, comprenant une chambre de combustion (8) délimitée par une enceinte de combustion (2) métallique, comportant une bouche d'entrée (7), équipée de moyens de fermeture (9) de type escamotable, et comportant au moins un orifice d'entrée d'air comburant (16) distinct, ladite enceinte de combustion (2) étant logée dans une enveloppe externe (12) métallique, l'enveloppe externe (12) comportant une ouverture frontale (13) coïncidant avec la bouche d'entrée (7) de l'enceinte de combustion (2) et comportant au moins une ouverture d'alimentation en air extérieur (18), et au moins une canalisation d'air comburant (17) et une réserve d'air préchauffé (20) étant ménagées entre l'enveloppe externe (12) et l'enceinte de combustion (2), la réserve d'air préchauffé (20) s'étendant depuis l'ouverture d'alimentation en air extérieur (18) jusqu'à une extrémité de la canalisation d'air comburant (17), la canalisation d'air comburant (17) s'étendant depuis ladite extrémité jusqu'à l'orifice d'entrée d'air comburant (16), la réserve d'air préchauffé (20) étant délimitée au moins en partie par une paroi interne de l'enveloppe externe (12) et par une paroi externe de l'enceinte de combustion (2), la réserve d'air préchauffé (20) contournant l'enceinte de combustion (2) par au moins un côté à partir de l'ouverture d'alimentation en air extérieur (18), le dispositif de chauffage comprenant un volet de réglage d'arrivée d'air neuf (19) configuré pour réguler une entrée d'air au sein de l'enceinte de combustion (2), **caractérisé en ce que** l'ouverture d'alimentation en air extérieur (18) est disposée latéralement à la bouche d'entrée (7) et que le volet de réglage d'arrivée d'air neuf (19) est en communication fluidique avec la réserve d'air préchauffé (20) et en communication fluidique avec la canalisation d'air comburant (17), ce volet de réglage d'arrivée d'air neuf (19) étant situé à une position intermédiaire entre la réserve d'air préchauffé (20) et la canalisation d'air comburant (17).

2. Dispositif de chauffage à bois (1) selon la revendication 1, **caractérisé en ce que** l'enceinte de combustion (2) comporte une partie arrière située diamétralement à l'opposé de la bouche d'entrée (7), la réserve d'air préchauffé (20) s'étendant jusqu'à ladite partie arrière.

3. Dispositif de chauffage à bois (1) selon la revendication 1 ou 2, **caractérisé en ce que** l'orifice d'entrée d'air comburant (16) est placé en aval du volet de réglage d'arrivée d'air neuf (19), dans le sens de circulation de l'air depuis l'ouverture d'alimentation en air extérieur (18).

4. Dispositif de chauffage à bois (1) selon l'une quelconque des revendications précédentes, **caractérisé en ce que** le volet de réglage d'arrivée d'air neuf (19) est déporté par rapport à l'ouverture d'alimentation en air extérieur (18).

5. Dispositif de chauffage à bois (1) selon l'une quelconque des revendications précédentes, **caractérisé en ce que** le volet de réglage d'arrivée d'air neuf (19) est situé au niveau de l'extrémité de la canalisation d'air comburant (17).

6. Dispositif de chauffage à bois (1) selon l'une quelconque des revendications précédentes, **caractérisé en ce que** la canalisation d'air comburant (17) s'étend en partie au-dessus de l'enceinte de combustion (2).

7. Dispositif de chauffage à bois (1) selon l'une quelconque des revendications précédentes, **caractérisé en ce que** l'ouverture d'alimentation en air extérieur (18) est délimitée au moins en partie par l'ouverture frontale (13) de l'enveloppe externe (12) et au moins en partie par l'enceinte de combustion (2).

8. Dispositif de chauffage à bois (1) selon l'une quelconque des revendications précédentes, **caractérisé en ce que** la réserve d'air préchauffé (20) s'étend de part et d'autre et latéralement à l'enceinte de combustion (2), depuis des ouvertures d'alimentation en air extérieur (18) disposées latéralement de part et d'autre de ladite bouche d'entrée (7) de l'enceinte de combustion (2).

9. Dispositif de chauffage à bois (1) selon l'une quelconque des revendications précédentes, **caractérisé en ce que** le au moins un orifice d'entrée d'air comburant (16) débouche dans la chambre de combustion (8), au-dessus de la bouche d'entrée (7).

10. Dispositif de chauffage à bois (1) selon l'une quelconque des revendications précédentes, **caractérisé en ce que** la paroi interne de l'enveloppe externe (12) est située immédiatement en regard de la paroi externe de l'enceinte de combustion (2), le dispositif de chauffage (1) ne comportant pas de paroi intermédiaire intercalée entre ladite paroi interne de l'enveloppe externe et ladite paroi externe de l'enceinte de combustion.

11. Dispositif de chauffage à bois (1) selon l'une quelconque des revendications précédentes, **caractérisé en ce que** les moyens de fermeture (9) sont définis par au moins un volet de fermeture monté pivotant ou coulissant sur l'enceinte de combustion (2) pour refermer la bouche d'entrée (7) en position de fermeture.

12. Dispositif de chauffage à bois (1) selon la revendication 11, **caractérisé en ce que** le au moins un volet de fermeture comporte une paroi vitrée.

## Patentansprüche

1. Holzheizvorrichtung (1), wie ein Ofen oder ein Kamin, umfassend eine Brennkammer (8), die von einem metallischen Brennraum (2) begrenzt wird, der eine Einlassöffnung (7) aufweist, die mit einfahrbaren Schließmitteln (9) ausgestattet ist, und mindestens eine separate Verbrennungslufteinlassöffnung (16) aufweist, wobei der Brennraum (2) in einem metallischen Außengehäuse (12) untergebracht ist, wobei das Außengehäuse (12) eine vordere Öffnung (13) aufweist, die mit der Einlassöffnung (7) des Brennraums (2) zusammenfällt, und mindestens eine Außenluftzufuhröffnung (18) aufweist, und wobei zwischen dem Außengehäuse (12) und dem Brennraum (2) mindestens ein Verbrennungsluftkanal (17) und ein Vorwärmluftvorratsbehälter (20) angeordnet sind, wobei der Vorwärmluftvorratsbehälter (20) sich von der Außenluftzufuhröffnung (18) bis zu einem Ende des Verbrennungsluftkanals (17) erstreckt, wobei der Verbrennungsluftkanal (17) sich von diesem Ende bis zur Verbrennungslufteinlassöffnung (16) erstreckt, wobei der Vorwärmluftvorratsbehälter (20) zumindest teilweise durch eine Innenwand des Außengehäuses (12) und durch eine Außenwand des Brennraums (2) begrenzt ist, wobei der Vorwärmluftvorratsbehälter (20) den Brennraum (2) an zumindest einer Seite von der Außenluftzufuhröffnung (18) aus umgibt, wobei die Heizvorrichtung eine Frischlufteinlassregelklappe (19) umfasst, die dazu konfiguriert ist, einen Lufteinlass innerhalb des Brennraums (2) zu regulieren, **dadurch gekennzeichnet, dass** die Außenluftzufuhröffnung (18) seitlich zur Einlassöffnung (7) angeordnet ist und dass die Frischlufteinlassregelklappe (19) in Fluidverbindung mit dem Vorwärmluftvorratsbehälter (20) und in Fluidverbindung mit dem Verbrennungsluftkanal (17) steht, wobei sich diese Frischlufteinlassregelklappe (19) in einer Zwischenposition zwischen dem Vorwärmluftvorratsbehälter (20) und dem Verbrennungsluftkanal (17) befindet.

2. Holzheizvorrichtung (1) nach Anspruch 1, **dadurch gekennzeichnet, dass** der Brennraum (2) einen der Einlassöffnung (7) diametral gegenüberliegenden hinteren Teil aufweist, wobei sich der Vorwärmluftvorratsbehälter (20) bis zu dem hinteren Teil erstreckt.

3. Holzheizvorrichtung (1) nach Anspruch 1 oder 2,
**dadurch gekennzeichnet, dass** die Verbrennungslufteinlassöffnung (16), von der Außenluftzufuhröffnung (18) aus, in Luftzirkulationsrichtung hinter der Frischlufteinlassregelklappe (19) platziert ist.

4. Holzheizvorrichtung (1) nach einem der vorstehenden Ansprüche, **dadurch gekennzeichnet, dass** die Frischlufteinlassregelklappe (19) gegenüber der Außenluftzufuhröffnung (18) versetzt ist.

5. Holzheizvorrichtung (1) nach einem der vorstehenden Ansprüche, **dadurch gekennzeichnet, dass** sich die Frischlufteinlassregelklappe (19) am Ende des Verbrennungsluftkanals (17) befindet.

6. Holzheizvorrichtung (1) nach einem der vorstehenden Ansprüche, **dadurch gekennzeichnet, dass** sich der Verbrennungsluftkanal (17) teilweise oberhalb des Brennraums (2) erstreckt.

7. Holzheizvorrichtung (1) nach einem der vorstehenden Ansprüche, **dadurch gekennzeichnet, dass** die Außenluftzufuhröffnung (18) zumindest teilweise durch die vordere Öffnung (13) des Außengehäuses (12) und zumindest teilweise durch den Brennraum (2) begrenzt ist.

8. Holzheizvorrichtung (1) nach einem der vorstehenden Ansprüche, **dadurch gekennzeichnet, dass** der Vorwärmluftvorratsbehälter (20) sich beidseitig und seitlich vom Brennraum (2), von beiderseits seitlich der Einlassöffnung (7) des Brennraums (2) angeordneten Außenluftzufuhröffnungen (18) aus zum Brennraum (2) erstreckt.

9. Holzheizvorrichtung (1) nach einem der vorstehenden Ansprüche, **dadurch gekennzeichnet, dass** die mindestens eine Verbrennungslufteinlassöffnung (16) oberhalb der Einlassöffnung (7) in die Brennkammer (8) mündet.

10. Holzheizvorrichtung (1) nach einem der vorstehenden Ansprüche, **dadurch gekennzeichnet, dass** die Innenwand des Außengehäuses (12) sich unmittelbar gegenüber der Außenwand des Brennraums (2) befindet, wobei die Heizvorrichtung (1) keine zwischen der Innenwand des Außengehäuses und der Außenwand des Brennraums zwischengelagerte Zwischenwand umfasst.

11. Holzheizvorrichtung (1) nach einem der vorstehenden Ansprüche, **dadurch gekennzeichnet, dass** die Schließmittel (9) durch mindestens eine schwenkbar oder verschiebbar am Brennraum (2) montierte Verschlussklappe definiert sind, um die Einlassöffnung (7) in Schließstellung zu verschließen.

12. Holzheizvorrichtung (1) nach Anspruch 11, **dadurch gekennzeichnet, dass** mindestens eine Verschlussklappe eine Glaswand aufweist.

## Claims

1. Wood heating device (1), such as a stove or a wood-burner, comprising a combustion chamber (8) delimited by a metal combustion space (2), having an inlet opening (7), equipped with retractable closing means (9), and having at least one distinct oxidant air inlet orifice (16), said combustion space (2) being housed in a metal outer casing (12), the outer casing (12) having a front opening (13) coinciding with the inlet opening (7) of the combustion space (2) and having at least one outside-air supply opening (18), and at least one oxidant air duct (17) and a reserve of preheated air (20) being provided between the outer casing (12) and the combustion space (2), the reserve of preheated air (20) extending from the outside-air supply opening (18) to an end of the oxidant air duct (17), the oxidant air duct (17) extending from said end to the oxidant air inlet orifice (16), the reserve of preheated air (20) being delimited at least in part by an inner wall of the outer casing (12) and by an outer wall of the combustion space (2), the reserve of preheated air (20) bypassing the combustion space (2) on at least one side from the outside-air supply opening (18), the heating device comprising a fresh air inlet adjustment flap (19) designed to regulate air intake into the combustion space (2),
**characterized in that** the outside-air supply opening (18) is arranged laterally to the inlet opening (7) and the fresh air inlet adjustment flap (19) is in fluid communication with the reserve of preheated air (20) and in fluid communication with the oxidant air duct (17), this fresh air inlet adjustment flap (19) being located at an intermediate position between the reserve of preheated air (20) and the oxidant air duct (17).

2. Wood heating device (1) according to claim 1, **characterized in that** the combustion space (2) comprises a rear part located diametrically opposite the inlet opening (7), the reserve of preheated air (20) extending to said rear part.

3. Wood heating device (1) according to either claim 1 or claim 2, **characterized in that** the oxidant air inlet orifice (16) is placed downstream of the fresh air inlet adjustment flap (19), in the direction in which air circulates from the outside-air supply opening (18).

4. Wood heating device (1) according to any of the preceding claims, **characterized in that** the fresh air inlet adjustment flap (19) is offset relative to the outside-air supply opening (18).

5. Wood heating device (1) according to any of the preceding claims, **characterized in that** the fresh air inlet adjustment flap (19) is located at the end of the oxidant air duct (17).

6. Wood heating device (1) according to any of the preceding claims, **characterized in that the** oxidant air duct (17) extends partially above the combustion space (2).

7. Wood heating device (1) according to any of the preceding claims, **characterized in that** the outside-air supply opening (18) is delimited at least in part by the front opening (13) of the outer casing (12) and at least in part by the combustion space (2).

8. Wood heating device (1) according to any of the preceding claims, **characterized in that** the reserve of preheated air (20) extends on either side and laterally to the combustion space (2), from outside-air supply openings (18) arranged laterally on either side of said inlet opening (7) of the combustion space (2).

9. Wood heating device (1) according to any of the preceding claims, **characterized in that** the at least one oxidant air inlet orifice (16) opens into the combustion chamber (8), above the inlet opening (7).

10. Wood heating device (1) according to any of the preceding claims, **characterized in that** the inner wall of the outer casing (12) is located immediately opposite the outer wall of the combustion space (2), the heating device (1) having no intermediate wall interposed between said inner wall of the outer casing and said outer wall of the combustion space.

11. Wood heating device (1) according to any of the preceding claims, **characterized in that** the closing means (9) are defined by at least one closure flap pivotably or slidably mounted on the combustion space (2) in order to close the inlet opening (7) in the closed position.

12. Wood heating device (1) according to claim 11, **characterized in that** the at least one closure flap comprises a glazed wall.
